Europäisches Patentamt

European Patent Office

Office européen des brevets

(11) Publication number: **0 391 152**
**A1**

## (12) EUROPEAN PATENT APPLICATION

(21) Application number: **90105418.9**

(22) Date of filing: **22.03.90**

(51) Int. Cl.5: **B29B 7/76**

(30) Priority: **03.04.89 JP 84577/89**

(43) Date of publication of application:
**10.10.90 Bulletin 90/41**

(84) Designated Contracting States:
**DE GB IT**

(71) Applicant: **Kabushiki Kaisha Polyurethane Engineering**
**9-12, 2-chome Osaki**
**Shinagawa-ku Tokyo-to(JP)**

(72) Inventor: **Tawada, Takeshi**
**16-2, Aza-minaminokiri, Wakamatsu-cho**
**Okazaki-shi, Aichi-ken(JP)**

(74) Representative: **Liedl, Gerhard**
**Steinsdorfstrasse 21 - 22**
**D-8000 München 22(DE)**

(54) **Apparatus for mixing composite synthetic resin.**

(57) An apparatus for mixing chemically reactive resin components including a first mixing chamber (20) in which the respective resin components to be mixed are ejected in the opposite directions, a first cleaning member (25) which is reciprocally movably provided in the first mixing chamber to discharge a mixture therefrom, a discharge chamber (30) which is connected to the first mixing chamber, a second cleaning member (35) which is reciprocally movably provided in the discharge chamber, a second mixing chamber (40) which is diagonally opposed to the first mixing chamber to open into the discharge chamber, and a third cleaning member (45) which is reciprocally movably provided in the second mixing chamber.

Fig. 1

## APPARATUS FOR MIXING COMPOSITE SYNTHETIC RESIN

The present invention relates to a composite synthetic resin mixing apparatus for mixing chemically reactive resin components, such as polyurethane or the like to be poured in a molding cavity.

For instance, in a molding process of polyurethane resin, different resin components which are chemically reactive to each other are poured in a mixing chamber of a mixing apparatus to be stirred and mixed, so that the mixture can be discharged into a molding die. Usually restrictions and/or bent portions are provided in the mixing chamber or in the discharge passage of the mixture to increase the mixing and stirring efficiency of the resin components to be mixed and to provide a smooth flow of the discharged mixture.

For example, Japanese Unexamined Patent Publication (Kokai) No. 58-167145 discloses a mixing head having a plurality of movable baffle plates which can be retractably inserted in the mixing chamber.

However in this mixing head, although a high restriction effect of the passage of the resin components flowing in the mixing chamber can be expected, it is very difficult to realize a smooth flow of the resin components in the discharge portion.

Japanese Examined Patent Publication (Kokoku) No. 57-30062 discloses a mixing apparatus having a mixing chamber in which a restricting slider having an opening which defines a part of the mixing chamber is reciprocally movably provided to change the direction of the passage of the synthetic resin components flowing in the mixing chamber, to thereby increase the mixing efficiency.

In this mixing apparatus, however, since the change in the direction of the resin components largely depends on the size of the mixing chamber, no sufficient mixing efficiency can be obtained.

Furthermore, there is almost no conventional mixing apparatus which focuses on a solution to a decrease in a stirring efficiency due to a turbulence of an initial flow of the resin components at the commencement of the mixture.

The present invention is aimed at an increase of the mixing and stirring efficiency.

Namely, the primary object of the present invention is to provide a mixing apparatus which can strikingly increase a stirring and mixing efficiency of resin components to be mixed.

Another object of the present invention is to provide an improved mixing apparatus in which a smooth flow of a uniform mixture of resin components can be discharged from the mixing chamber into a molding die, with a high stirring and mixing efficiency.

A concept of an "increase" of the stirring and mixing efficiency referred to in the present specification also includes a prevention of occurrence of a turbulence of an initial flow of the resin components at the commencement of the mixture.

To achieve the object mentioned above, according to the present invention, there is provided a composite synthetic resin mixing apparatus for mixing a plurality of resin components which are chemically reactive to each other, comprising a first mixing chamber which has opposed inlet ports through which the respective resin components to be mixed are ejected therein in the opposite directions and an outlet port through which a primary mixture of the resin components thus obtained in the first mixing chamber is discharged, a first cleaning member which is provided in the first mixing chamber to reciprocally move between a retracted position in which the first cleaning member opens the inlet ports of the resin components to be mixed and an advance position in which the front end of the first cleaning member is located at the outlet port to discharge the mixture in the first mixing chamber therefrom, a discharge chamber which is connected to the first mixing chamber through the outlet port and which has a discharge port, a second cleaning member which is provided in the discharge chamber to reciprocally move between a retracted position in which the second cleaning member partially opens the outlet port of the first mixing chamber and an advance position in which the second cleaning member closes the discharge port of the discharge chamber, a second mixing chamber which is diagonally opposed to the outlet port of the first mixing chamber and which opens into the discharge chamber, and a third cleaning member having an inlet opening which is provided in the second mixing chmber to reciprocally move between a retracted position in which the third cleaning member defines a predetermined volume of the second mixing chamber and an advance position in which the front end of the third cleaning member is located at the inlet opening to expel therefrom the mixture ejected in the second mixing chamber from the first mixing chamber through the discharge chamber.

With the composite synthetic resin mixing apparatus, as constructed above, two or more resin components which are chemically reactive to each other are injected into the first mixing chamber from the respective inlet ports opposed to each other, so that the resin components ejected in the opposite directions collide with each other and are mixed in the first mixing chamber. Thereafter, the primary mixture (i.e. the mixture formed in the first mixing chamber) is ejected into the discharge chamber through the restriction port which is partially closed by the second cleaning member. As a result, the primary mixture ejected into the discharge chamber from the restriction port is ejected into the second mixing chamber which is diagonally opposed to the restriction port and which opens into the discharge chamber, so that a secondary stirring and mixing of the primary mixture takes place in the second mixing chamber. The secondary mixture mixed in the second mixing chamber overflows from the inlet opening thereof into the discharge chamber and then flows into the discharge port of the discharge chamber as a static flow to be fed into a molding die.

Upon completion of the mixture, the first cleaning member in the first mixing chamber and the third cleaning member in the second mixing chamber are advanced to discharge the residual mixed resin components remaining in the respective mixing chambers into the discharge chamber, so that the resin components discharged into the discharge chamber are expelled out therefrom by the forward movement of the second cleaning member in the discharge chamber.

The invention will be described below in detail with reference to the accompanying drawings, in which;

Fig. 1 is a longitudinal sectional view showing a whole construction of a polyurethane resin mixing apparatus according to an embodiment of the present invention;

Fig. 2 is an enlarged longitudinal sectional view of a main part of a polyurethane resin mixing apparatus according to an embodiment of the present invention, shown in a mixing position (retracted position);

Fig. 3 is a sectional view taken along the line 3-3 in Fig. 2;

Fig. 4 is an enlarged longitudinal sectional view of a main part of a polyurethane reain mixing apparatus according to an embodiment of the present invention, shown in a mixing completion position (advance position); and,

Fig. 5 is a sectional view taken along the line 5-5 in Fig. 4.

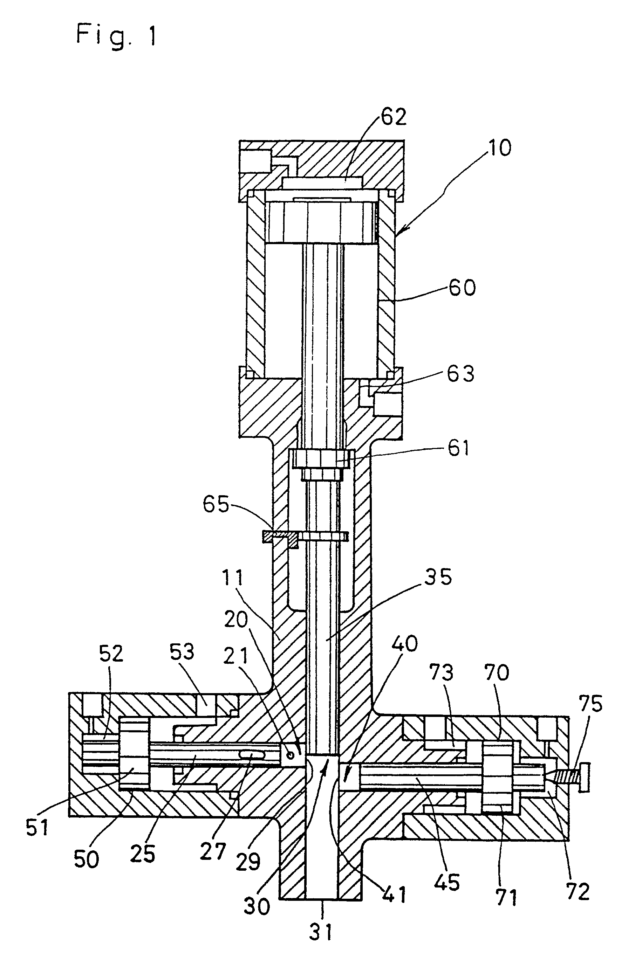

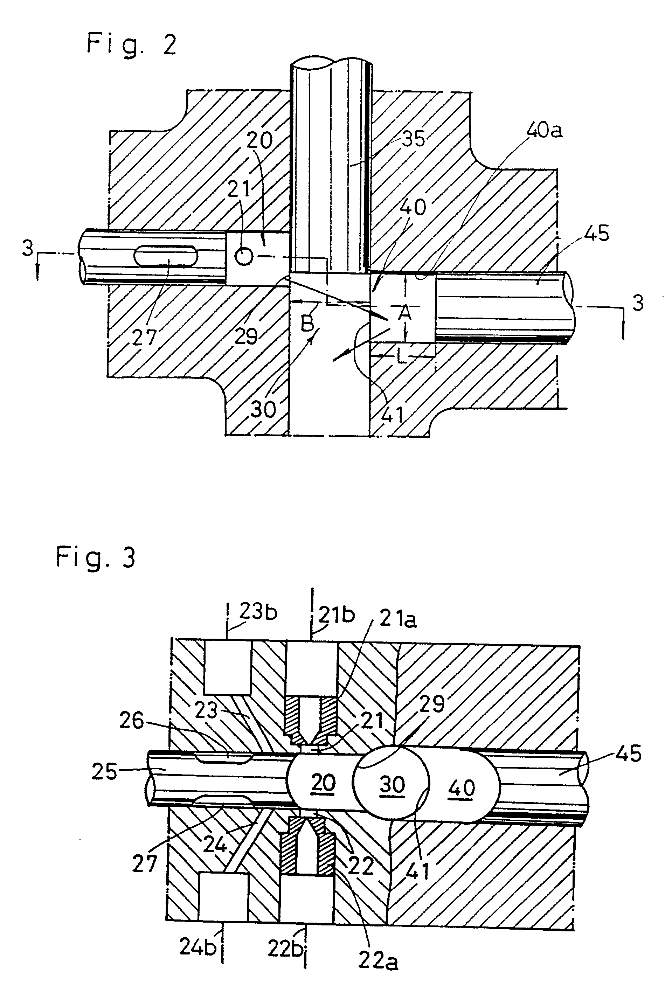

A composite synthetic resin mixing apparatus 10 for polyurethane resin shown in Fig. 1 has a body block 11 in which a first mixing chamber 20, a discharge chamber .30 and a second mixing chamber 40 are formed. As can be seen in Figs. 2 and 3, the first mixing chamber 20 has inlet ports 21 and 22 through which chemically reactive resin components to be mixed are introduced therein and an outlet port (discharge port) 29 through which a mixture is discharged therefrom. A primary mixing of the resin components is effected in the first mixing chamber 20.

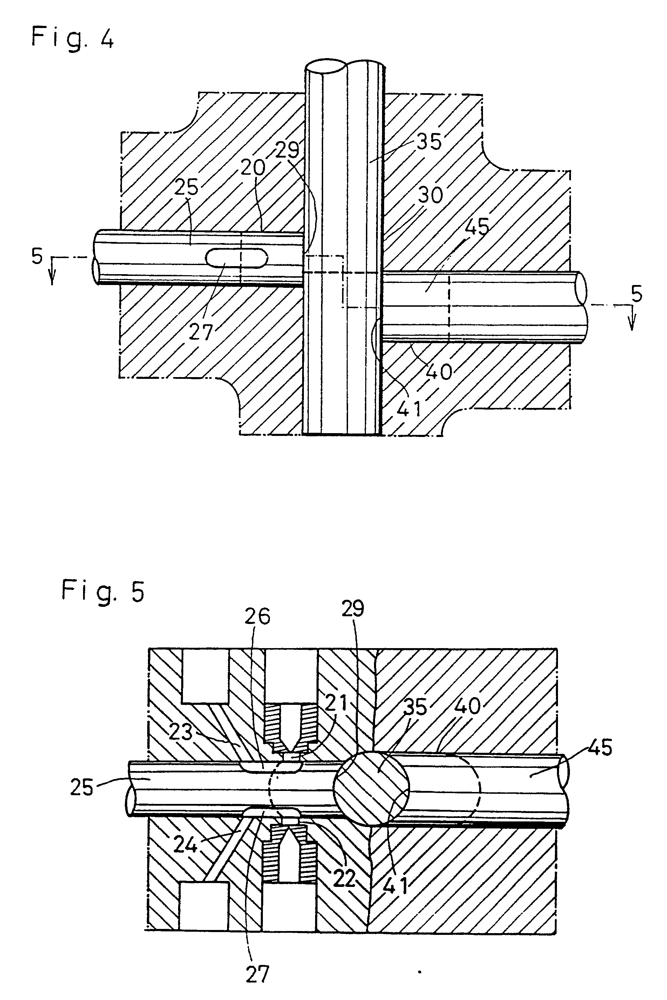

The first mixing chamber 20 has therein a first cleaning member 25 which reciprocally moves between a retracted position in which the cleaning member 25 opens the inlet ports 21 and 22, as shown in Figs. 2 and 3, and an advance position in which the front end of the cleaning member 25 is located at an opening end of the discharge port 29, as shown in Figs. 4 and 5.

In association with the first mixing chamber 20, numerals 21a and 22a (Fig.3) designate injection nozzles provided in the inlet ports 21 and 22, 21b and 22b (Fig. 3) resin component feed pipes through which the respective resin components to be mixed are fed from a reservoir (not shown), 23 and 24 (Figs. 3 and 5) outlet ports through which the respective resin components are returned, and 23b and 24b (Fig. 3) return pipes which connect the outlet ports 23 and 24 to the reservoir to return the respective resin components thereto, respectively.

The first cleaning member 25 is provided on its outer periphery with axial return grooves 26 and 27 which connect the inlet ports 21 and 22 and the outlet ports 23 and 24 to circulate the respective resin components, respectively when the mixing is finished.

The first cleaning member 25 is actuated by a hydraulic cylinder 50 in which a piston 51 is slidably fitted. Namely, the first cleaning member 25 constitutes a piston rod of the piston 51. The working fluid (e.g. pressurized oil) is supplied to and discharged from the cylinder 50 through inlet and outlet ports 52 and 53 formed in the cylinder body.

The discharge chamber 30 having a circular cross section is connected to the discharge port 29 and has an outlet port 31 for a secondary mixture. The discharge chamber 29 has therein a second cleaning member 35 which reciprocally moves between a retracted position in which the second cleaning member 35 partially opens the discharge port 29 shown in Fig. 2 and an advance position in which the front end of the second cleaning member 35 is located at the opening end of the outlet port 31 to close the discharge port 29, as shown in Fig. 4.

The second cleaning member 35 is actuated by a hydraulic cylinder 60 in which a piston 61 is slidably fitted. Namely, the second cleaning member 35 constitutes a piston rod of the piston 61. The working fluid (e.g. pressurized oil) is supplied to and discharged from the cylinder 60 through inlet and outlet ports 62 and 63 formed in the cylinder body thereof. The rearward movement of the second cleaning member 35 is restricted by a limit switch mechanism 65 provided in the body block 11 to control the extent of restriction of the discharge port 29 (i.e. the passage area thereof).

The second mixing chamber 40 is diagonally opposed to the discharge port 29 so that the axis of the second mixing chamber is deviated from and below the axis of the discharge port 29, as shown in Fig. 1. The second mixing chamber 40 opens into the discharge chamber30. Namely, as mentioned before, the second mixing chamber 40 is placed so that the primary mixture ejected from the discharge port 29 is introduced into the second mixing chamber 40. In more detail, as shown in Fig. 2, the upper edge 40a of the second mixing chamber 40 is preferably below the axis of the opposed first mixing chamber 20. Preferably, the inner diameter A of the second mixing chamber! 40 is substantially equal to the inner diameter B of the discharge chamber 30. The axial length L (Fig. 2) of the second mixing chamber 40 can be adjusted by a third cleaning member 45 which will be discussed hereinafter in detail.Preferably,the axial length L of the second mixing chamber 40 is substantially equal to or 1.5 times the inner diameter B of the discharge chamber 30.

The second chamber can be also formed sectionally in elliptical shapes or rectangle shapes or polygon shapes, besides the circular shape shown in the embodiment.

The third cleaning member 45 is reciprocally movably fitted in the second mixing chamber 40 between a retracted position in which the third cleaning member 45 defines a predetermined volume of the second mixing chamber 40 having the axial length L and an advance position in which the front end of the third cleaning member 45 is located at the opening end 41 of the second mixing chamber 40. The third cleaning member 45 is actuated by a hydraulic cylinder 70 in whch a piston 71 is slidably fitted. Namely, the third cleaning member 45 constitutes a piston rod of the piston 71. The working fluid (e.9. pressurized oil) is supplied to and discharged from the cylinder 70 through inlet and outlet ports 72 and 73 formed in the cylinder body thereof. The rearward movement of the third cleaning member 45, and accordingly, the axial length L of the second mixing chamber 40 are adjustably restricted by an adjustable stop (screw) 75 provided in the cylinder body of the hydraulic cylinder 70.

As can be understood from the foregoing, according to the present invention, the resin components which are introduced into the first mixing chamber through the respective inlet ports in the opposite directions come into collision with each other, so that the resin components are primarily stirred and mixed. Thereafter, the primary mixture thus obtained is ejected from the restricting discharge port into the second mixing chamber which is diagonally opposed to the first mixing chamber through the discharge chamber. As a result, the secondary mixing (stirring) of the primary mixture takes place in the second mixing chamber. Due to auch a plurality of collision and mixing steps, the resin components can be uniformly mixed.

After the second mixing, the mixed components (secondary mixture) overflow in the discharge chamber again, so that the flow rate of the mixture which has been increased due to the restriction and the turbulence is sufficiently reduced. Consequently, a smooth and uniform flow of the mixed components is introduced into a molding die (not shown) through the discharge port of the discharge chamber.

As can be seen from the above discussion, according to the present invention, both a high mixing and stirring efficiency of the resin components and a smooth flow of the discharged mixture can be realized by the continuous steps of the primary mixing (stirring), the restriction of the secondary mixing (stirring),and the change of direction of flow. Furthermore, according to the present invention, no decrease of the mixing efficiency due to the turbulence of the initial flow of the resin components at the commencement of the mixing operation occurs.

Furthermore, according to the present invention, in accordance with mixing conditions or need, etc., the cross sectional area of the outlet port of the first mixing chamber, i.e. the extent of restriction can be easily and practically varied to be an optimum value by the axial displacement of the second cleaning member, and the axial length of the second mixing chamber and accordingly the volume of the second mixing chamber can be also easily and practically adjusted to an optimum value by the axial displacement of the third cleaning member.

## Claims

1. An apparatus for mixing a plurality of resin components which are chemically reactive to each other, comprising:
a first mixing chamber which has opposed inlet ports through which the respective resin components to be mixed are ejected therein in the opposite directions and an outlet port through which a primary mixture of the resin components thus obtained in the first mixing chamber is discharged,
a first cleaning member which is provided in the first mixing chamber to reciprocally move between a retracted position in which the first cleaning member opens the inlet ports of the resin components to be mixed and an advance position in which the front end of the first cleaning member is located at the outlet port to discharge the mixture in the first mixing chamber therefrom,
a discharge chamber which is connected to the first mixing chamber through the outlet port and which has a discharge port,

a second cleaning member which is provided in the discharge chamber to reciprocally move between a retracted position in which the second cleaning member partially opens the outlet port of the first mixing chamber and an advance position in which the second cleaning member closes the discharge port of the discharge chamber,

a second mixing chamber which is diagonally opposed to the outlet port of the first mixing chamber and which opens into the discharge chamber, and

a third cleaning member having an inlet opening which is provided in the second mixing chamber to reciprocally move between a retracted position in which the third cleaning member defines a predetermined volume of the second mixing chamber and an advance position in which the front end of the third cleaning member is located at the inlet opening to expel therefrom the mixture ejected in the second mixing chamber from the first mixing chamber through the discharge chamber.

2. A mixing apparatus according to claim 1, further comprising a first actuator for reciprocally moving the first cleaning member in the axial direction thereof.

3. A mixing apparatus according to claim 2, further comprising a second actuator for reciprocally moving the second cleaning member in the axial direction thereof.

4. A mixing apparatus according to claim 3, further comprising a third actuator for reciprocally moving the third cleaning member in the axial direction thereof.

5. A mixing apparatus according to claim 3, further comprising a control means for adjusting the axial displacement of the second cleaning member.

6. A mixing apparatus according to claim 4, further comprising an adjusting means for adjusting the axial displacement of the third cleaning member.

7. A mixing apparatus according to claim 2, wherein said first actuator comprises a hydraulic cylinder device including a piston to which the first cleaning member is connected.

8. A mixing apparatus according to claim 3, wherein said second actuator comprises a hydraulic cylinder device including a piston to which the second cleaning member is connected.

9. A mixing apparatus according to claim 4, wherein said third actuator comprises a hydraulic cylinder device including a piston to which the third cleaning member is connected.

10. A mixing apparatus according to claim 1, wherein said first cleaning member is provided on its outer periphery with return grooves for the resin components, which are connected to the inlet ports of the resin components to circulate the same.

11. A mixing apparatus according to claim 1, wherein said second mixing chamber and said discharge chamber are both circular in cross section, said second mixing chamber having a diameter substantially equal to the inner diameter of the discharge chamber.

12. A mixing apparatus according to claim 11, wherein the axial length of the second mixing chamber is substantially equal to the inner diameter of the discharge chamber.

13. A mixing apparatus according to claim 11, wherein the axial length of the second mixing chamber is substantially 1.5 times the inner diameter of the discharge chamber.

Fig. 1

## Fig. 2

## Fig. 3

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 11, no. 13 (C-397)[2460], 14th January 1987; & JP-A-61 187 926 (TOHO KIKAI KOGYO K.K.) 21-08-1986 --- | 1-13 | B 29 B 7/76 |
| A | GB-A-2 086 747 (ADMIRAL) * Page 3, lines 65-86; figure 5 * --- | 6-9 | |
| A | DE-B-2 513 492 (UPJOHN) --- | | |
| A | US-A-4 440 500 (SCHNEIDER) --- | | |
| A | DE-A-3 313 042 (BAUER) --- | | |
| A | DE-A-3 612 125 (HANSEN) ----- | | |

TECHNICAL FIELDS
SEARCHED (Int. Cl.5)

B 29 B

The present search report has been drawn up for all claims

| Place of search | Date of completion of the search | Examiner |
|---|---|---|
| THE HAGUE | 04-07-1990 | PEETERS S. |

EPO FORM 1503 03.82 (P0401)